# EUROPEAN PATENT SPECIFICATION

(11) **EP 1 324 871 B1**
(45) Date of publication and mention of the grant of the patent: **12.01.2005**
(21) Application number: 01975921.6
(22) Date of filing: 12.10.2001
(51) Int. Cl.: B29C 69/02, B29C 43/22, B29C 47/88, B29C 43/28, B29C 47/32

(54) **METHOD AND APPARATUS FOR FORMING AN AUTOMOTIVE TIM STRIP**
VERFAHREN UND VORRICHTUNG ZUR FORMUNG VON ZIERLEISTEN FÜR KRAFTFAHRZEUGE AUS EXTRUDIERTEM THERMOPLASTISCHEM KUNSTSTOFF
PROCEDE ET DISPOSITIF POUR LA REALISATION D'UNE BAGUETTE D'UN VEHICULE

(30) Priority: 12.10.2000 US 239725 P
(43) Date of publication of application: 09.07.2003
(73) Proprietor: Decoma Exterior Trim Inc., Concord, Ontario L4K 4J5 (CA)
(72) Inventor: ZOHAR, Avi, Thornhill, Ontario L4J 7W6 (CA); WAKEFIELD, Earlby, Guelph, Ontario N1G 2B6 (CA); MOUSER, Scott, Brampton, Ontario L6S 4C9 (CA)
(74) Representative: Hössle Kudlek & Partner
(86) International application number: PCT/CA2001/001435
(87) International publication number: WO 2002/030656

(56) References cited:
- FR-A- 2 698 578
- US-A- 5 395 575
- US-A- 5 904 884
- PATENT ABSTRACTS OF JAPAN vol. 007, no. 063 (M-200), 16 March 1983 (1983-03-16) & JP 57 207041 A (HASHIMOTO FORMING KOGYO KK), 18 December 1982 (1982-12-18)

## Description

### Field of Invention

This invention relates to a method for forming an automative trim strip according to the preamble of claim 1 and to an apparatus for making an automative trim strip according to the preamble of claim 14.

### Background of Invention

United States Patent no. 5,904,884 describes a process for forming an extruded trim strip. The thermoplastic material is extruded onto an endless carrier belt. The extrudate is then end formed to provide a trim strip having a predefined length.

The described process is able to address the principal problem of forming a trim piece having a predetermined length after cooling. However, in order to maximize the throughput of the apparatus, the length of the endless belt must be minimized, otherwise, the capital cost of the apparatus presents an insurmountable barrier.

Further, in order to properly cool the formed end pieces, the cooling tank must be maximized, adding additional capital costs to the apparatus. If the trim pieces are not cooled properly, or removed from the endless belt too early, the ends of the trim pieces tend to curl at the ends. A trim piece which has curled ends is undesirable as such trim pieces will have a tendency to lift off the vehicle against the adhesive used to apply the trim piece thereto.

US-A-5 904 884 discloses a method according to the preamble of claim 1. FR-A-2 698 578 discloses an apparatus according to the preamble of claim 14.

US-A-5 395 575 discloses a production line and a method for manufacturing strips of foil stabilized plastic moldings. A strip of a plastic extrudate is maintained under a predetermined tension load by use of an adjustable friction break on a stabilizer foil so that the heated plastics exiting the extruder will be uniform in initial profile, providing high-quality extrudate feeding into reforming wheels of the production line.

Patent Abstracts of Japan, JP 57 207 041 A discloses a method of forming a smooth surface on a molding. The method comprises the step of pressing part of the surface of the molding that is in a soft state after the extrusion molding.

### Summary of the Invention

The disadvantages of the prior art may be overcome by providing a method of forming automotive trim components by extruding a thermoplastic material onto a foil carrier having a low strength adhesive for releasably receiving the thermoplastic material. The foil carrier assists in maintaining the trim piece in a flat condition during the cooling process. Removing or peeling the foil carrier presents a substantially flat surface for receiving adhesives for attaching the automotive trim piece to the vehicle.

According to one aspect of the invention, there is provided a method for forming an automotive trim strip according to claim 1. The method includes steps of extruding a trim piece onto a foil carrier. The trim strip and foil carrier is then cooled. The foil carrier is removed presenting a substantially flat surface for receiving a permanent adhesive for attaching the trim strip to a vehicle. The foil carrier has a receiving surface having a low strength adhesive for releasably bonding the trim piece onto the foil carrier.

According to another aspect of the invention, there is provided an apparatus for making an automotive trim strip according to claim 14. The apparatus has an extruder producing an extrudate of a predetermined cross section. A roll carries a foil carrier having a receiving surface having a low strength adhesive releasably bonding the extrudate onto the foil carrier. A conveyor system transports the foil carrier from the extruder in order to receive the extrudate, through a cooling chamber to a cutter. A controller coordinates the speed of extrusion and the transport and the timing of the cutter.

Particular embodiments of the invention are the subject of the respective dependent claims.

### Description of the Drawings

In drawings which illustrate the embodiments of the present invention,

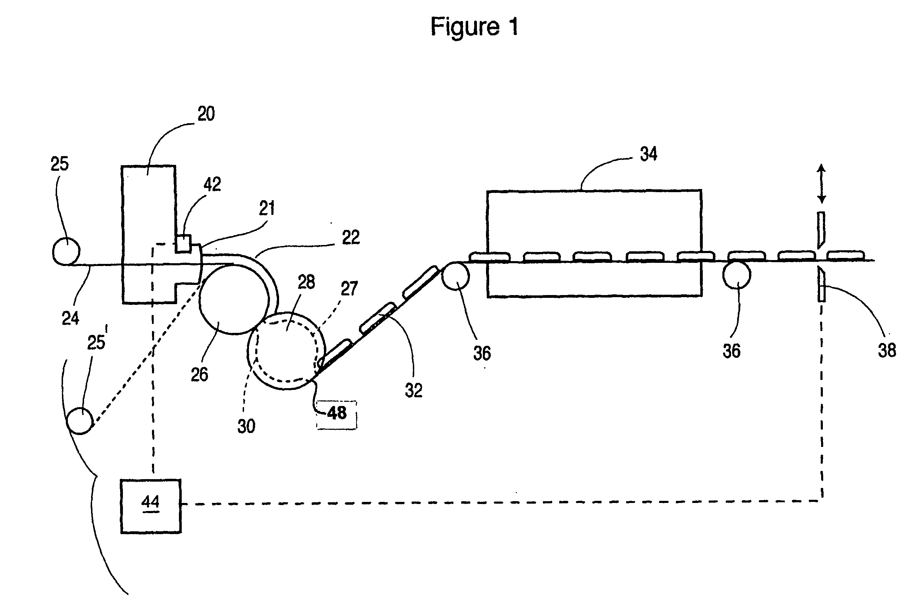

Figure 1 is a schematic of the method of the present invention.

### Description of the Invention

FIG. 1 illustrates a method of forming an extruded trim strip according to the invention which is formed on a foil carrier which moves consistently at a speed to minimize stresses on the softened plastic material.

Plastic material, for example polyvinylchloride, is extruded from an extrusion die 20. Extrusion die 20 may have a profile designed for a chosen profile of trim strip. Extrudate 22 emerges from extrusion nozzle 21 of die 20 under pressure from within the die. The extrusion nozzle 21 may have a shape to produce trim strip having a desired profile.

A foil carrier 24, preferably made of stainless steel having a thickness of about 0.25 to 0.5 mm unrolls from roll 25 and passes through the extrusion die 20 to emerge with the extrudate 22 and to pass, together with the extrudate 22 between a supporting idler wheel 26 and a molding periphery 27 of a forming wheel 28. Alternatively, aluminum foil of about 0.5 to 0.75 mm could also be used.

Optionally, the roll 25' is positioned to feed the foil carrier 24 immediately after the extrusion process. The extrudate 22 is fed directly onto the foil carrier 24.

The surface of foil carrier 24 which receives the extrudate 22 has a low strength adhesive applied thereto. Low strength means an adhesive which will not permanently bond the extrudate 22 to the foil carrier 24, nor leave a residue on the formed trim strips 32 after removal of the foil carrier 24. The foil carrier 24 can be peeled off of the extrudate. Properties of a suitable adhesive are governed by time, pressure and temperature of the application of the adhesive to the extrudate 22.

The forming wheel 28 has at least one mold cavity 30 in its periphery. In this case the shape of extrusion nozzle 21 may not be of major importance since it is possible to mold the whole trim strip in the cavity 30. Alternatively forming wheel 28 may have projections 48 to pinch form endless portions against the supporting idler wheel 26 without bearing on the intermediate portion of the trim strip. As the extrudate 22 and foil carrier 24 emerge from the extrusion die 20, the extrudate 22 lies above and is carried by the foil carrier 24. The foil carrier 24 passes around the periphery of idler wheel 26 carrying the extrudate 22 radially outwards of it so that extrudate 22 is sandwiched between the foil carrier 24 lying against the periphery of idler wheel 26 and molding periphery 27 of forming wheel 28. Forming wheel 28 has a profiled cavity 30 around its perimeter. The cavity 30 forms a trim strip 32 of the desired profile. The cavity 30 has a length greater than the eventual length of cooled trim strip 32 by an amount calculated to allow for shrinkage. This amount is relatively easy to determine by measurement in a stable process.

The foil carrier 24 is driven to travel at the speed at which extrudate is forced out of the extrusion die 20 and continues throughout its length at the same speed thereby minimizing or eliminating downstream stresses on the softened extrudate 22 as it is processed by downstream equipment such as forming wheel 28.

Foil carrier 24 carrying trim strips 32 which are still soft emerge from the channel of forming wheel 28 and pass through a cooling tank 34. Various rollers 36 define the path of conveyor system for moving foil carrier 24.

The foil carrier 24 still carrying trim strips 32 emerges from cooling tank or chamber 34. The foil carrier 24 is then cut between the trim strips 32 by cutter 38. The individual trim strips 32, with segregated foil carrier 24 can then be placed in racks to allow the trim strips 32 and foil carriers 24 to stand and cool to room temperature. Once cooled, the segregated foil carrier 24 may then be removed. The undersurface of the trim strip 32 on which the foil carrier 24 was adhered, is surprisingly flat and smooth. Since the trim strip 32 was cooled prior to removal, the ends of the trim strip 32 remain in a flat condition. As is well known in the art, an adhesive or double sided tape is applied to the underside of the trim strip 32 for permanent attachment to the vehicle.

Speed sensors 42 may be provided at the nozzle of the extrusion die 20. Signals from the speed sensors may be fed to computer 44 which provides control signals to control the speed of the forming wheel 28 and the cutter 38.

The invention has been described in an illustrative manner, and it is to be understood that the terminology which has been used is intended to be in the nature of words of description rather than of limitation. It is now apparent to those skilled in the art that many modifications and variations of the present invention are possible in light of the above teachings. It is, therefore, to be understood that the invention may be practiced otherwise than as specifically described, without departing from the scope of the appended claims.

## Claims

1. A method for forming an automotive trim strip (32) comprising the steps of
extruding a trim piece (22) onto a foil carrier (24),
cooling the trim strip (32) and foil carrier (24); and
removing the foil carrier (24) presenting a substantially flat surface for receiving a permanent adhesive for attaching the trim strip (32) to a vehicle, **characterized in that**
said foil carrier (24) having a receiving surface having a low strength adhesive for releasably bonding the trim piece (22) onto the foil carrier (24).

2. A method as claimed in claim 1 wherein said extruding step comprises extruding a thermoplastic material (22) through an extrusion die (20) of an extruder.

3. A method as claimed in claim 2 wherein said method includes a step of feeding said foil carrier (24) through said extruder (20, 21).

4. A method as claimed in claim 2 wherein said method includes a step of feeding said foil carrier (24) about an idler wheel (26) and positioning said foil carrier (24) to receive said thermoplastic material (22) being extruded from said extruder (21).

5. A method as claimed in claim 3 or 4 wherein said method includes a step of end forming the trim piece (22) after being extruded to contour ends thereof to provide the trim strip (32) with a predetermined final length after said cooling step.

6. A method as claimed in claim 5 wherein said feeding of said foil carrier (24) is at a speed corresponding with a speed of said thermoplastic material (22) being extruded from said extruder.

7. A method as claimed in claim 6 wherein said method further includes a step of cutting said foil carrier (24) at lengths carrying an individual one of said trim pieces (22).

8. A method as claimed in claim 7 wherein said cooling step includes travelling said trim strip (32) and foil carrier (24) through a cooling chamber (34).

9. A method as claimed in claim 8 wherein said cooling step further includes allowing said trim strip (32) and foil carrier (24) to stand and cool to room temperature.

10. A method as claimed in claim 9 wherein said foil (24) has a thickness of between 0.25 mm and 0.75 mm.

11. A method as claimed in claim 10 wherein said foil (24) is aluminum having a thickness between 0.5 mm and 0.75 mm.

12. A method as claimed in claim 10 wherein said foil (24) is stainless steel having a thickness of between 025 mm and 0.5 mm.

13. A method as claimed in claim 9, wherein said thermoplastic material (22) is polyvinylchloride.

14. An apparatus for making an automotive trim strip comprising
an extruder having a die (20) for producing an extrudate (22) of a predetermined cross section;
a roll (25) carrying a foil carrier (24);
a cooling chamber (34);
a cutter (38) ; and
a conveyor system comprising a series of idler wheels (26, 28) and rollers (36) for transporting said foil carrier (24) from said extruder in order to receive said extrudate (22), through said cooling chamber to said cutter;
a controller (44) operably connected with said extruder (20), conveyor system and said cutter (38) to coordinate a speed of extrusion, a speed of said transport and timing of said cutter, **characterized in that**
said foil carrier (24) has a receiving surface having a low strength adhesive releasably bonding the extrudate onto the foil carrier.

15. An apparatus as claimed in claim 14 wherein said apparatus further comprises a forming wheel (28) cooperating with one of said idler wheels (26) for end forming said extrudate as said extrudate (22) emerges from said extruder thereby forming a trim strip (32).

16. An apparatus as claimed in claim 15 wherein said cutter (38) is positioned to cut said foil carrier (24) at lengths to carry an individual one of said trim pieces (32).

## Patentansprüche

1. Verfahren zum Bilden einer Kraftfahrzeugzierleiste (32), das die folgenden Schritte umfasst:
Strangpressen eines Zierleistenteils (22) auf einen Folienträger (24),
Kühlen der Zierleiste (32) und des Folienträgers (24), und
Entfernen des eine im wesentlichen flache Oberfläche darstellenden Folienträgers (24), um einen dauerhaften Klebstoff für die Befestigung der Zierleiste (32) an einem Fahrzeug aufzunehmen, **dadurch gekennzeichnet, dass**
der Folienträger (24) eine Aufnahmeoberfläche aufweist, die einen schwach klebenden Klebstoff aufweist, um die Zierleiste (22) lösbar an den Folienträger (24) zu kleben.

2. Verfahren nach Anspruch 1, bei dem der Strangpressschritt das Strangpressen eines thermoplastischen Werkstoffs (22) durch eine Strangpressdüse (20) einer Strangpresse umfasst.

3. Verfahren nach Anspruch 2, wobei das Verfahren einen Schritt des Transportierens des Folienträgers (24) durch die Strangpresse (20, 21) umfasst.

4. Verfahren nach Anspruch 2, wobei das Verfahren einen Schritt des Transportierens des Folienträgers (24) um ein Mitlaufrad (26) und des Positionierens des Folienträgers (24) in der Weise, dass er den von der Strangpresse (21) stranggepressten thermoplastischen Werkstoff (22) aufnimmt, umfasst.

5. Verfahren nach Anspruch 3 oder 4, wobei das Verfahren einen Schritt des Formens des Zierleistenteils (22) umfasst, nachdem es stranggepresst worden ist, um seine Enden zu formen, um die Zierleiste (32) nach dem Kühlungsschritt mit einer vorgegebenen endgültigen Länge zu versehen.

6. Verfahren nach Anspruch 5, bei dem das Transportieren des Folienträgers (24) mit einer Geschwindigkeit erfolgt, die einer Geschwindigkeit entspricht, mit der der thermoplastische Werkstoff (22) von der Strangpresse extrudiert wird.

7. Verfahren nach Anspruch 6, wobei das Verfahren des weiteren einen Schritt des Abschneidens des Folienträgers (24) auf Längen umfasst, die jeweils ein einzelnes der Zierleistenteile (22) tragen.

8. Verfahren nach Anspruch 7, bei dem der Kühlungsschritt das Bewegen der Zierleiste (32) und des Folienträgers (24) durch eine Kühlungskammer (34) umfasst.

9. Verfahren nach Anspruch 8, bei dem in dem Kühlungsschritt des weiteren zugelassen wird, dass die Zierleiste (32) und der Folienträger (24) stillstehen und auf Raumtemperatur abkühlen.

10. Verfahren nach Anspruch 9, bei dem die Folie (24) eine Dicke im Bereich von 0,25 mm bis 0,75 mm hat.

11. Verfahren nach Anspruch 10, bei dem die Folie (24) aus Aluminium ist und eine Dicke im Bereich von 0,5 mm bis 0,75 mm hat.

12. Verfahren nach Anspruch 10, bei dem die Folie (24) rostfreier Stahl ist und eine Dicke im Bereich von 0,25 mm bis 0,5 mm hat.

13. Verfahren nach Anspruch 9, bei dem der thermoplastische Werkstoff (22) Polyvinylchlorid ist.

14. Vorrichtung zum Herstellen einer Kraftfahrzeugzierleiste, mit
einer Strangpresse, die eine Düse (20) für die Herstellung eines Strangpressprodukts (22) mit einem vorgegebenen Querschnitt aufweist,
einer Rolle (25), die einen Folienträger (24) trägt,
einer Kühlungskammer (34),
einer Schneideinrichtung (38), und
einem Beförderungssystem, das eine Reihe von Mitlaufrädern (26, 28) und Walzen (36) aufweist, um den Folienträger (24) von der Strangpresse, wo er das Strangpressprodukt (22) aufnimmt, durch die Kühlkammer zu der Schneideinrichtung zu transportieren, und
einer Steuereinheit (44), die mit der Strangpresse (20), dem Beförderungssystem und der Schneideinrichtung (38) verbunden ist, um die Strangpressgeschwindigkeit, die Geschwindigkeit des Transports und den Zeittakt der Schneideinrichtung zu koordinieren, **dadurch gekennzeichnet, dass**
der Folienträger (24) eine Aufnahmefläche mit einem schwach klebenden Klebstoff aufweist, um das Strangpressprodukt lösbar auf den Folienträger zu kleben.

15. Vorrichtung nach Anspruch 14, wobei die Vorrichtung des weiteren ein Formungsrad (28) aufweist, das mit einem der Mitlaufräder (26) zusammenwirkt, um das Ende des Strangpressprodukts zu formen, wenn das Strangpressprodukt (22) aus der Strangpresse austritt, wodurch eine Zierleiste (32) geformt wird.

16. Vorrichtung nach Anspruch 15, bei der die Schneideinrichtung (38) so angeordnet ist, dass sie den Folienträger (24) auf Längen abschneidet, die jeweils ein einziges der Zierleistenteile (32) tragen.

## Revendications

1. Procédé pour former une baguette d'habillage (32) pour automobiles, comprenant les étapes consistant à :
extruder une pièce d'habillage (22) sur un support en forme de feuille (24),
faire refroidir la baguette d'habillage (32) et le support en forme de feuille (24) ; et
enlever le support en forme de feuille (24) présentant une surface sensiblement plane pour recevoir un adhésif permanent afin d'attacher la baguette d'habillage (32) sur un véhicule,
**caractérisé en ce que** ledit support en forme de feuille (24) comporte une surface de réception ayant un faible pouvoir adhésif pour coller de façon détachable la pièce d'habillage (22) sur le support en forme de feuille (24).

2. Procédé selon la revendication 1, dans lequel ladite étape d'extrusion comprend d'extruder une matière thermoplastique (27) à travers une matrice d'extrusion (20) d'une extrudeuse.

3. Procédé selon la revendication 2, dans lequel ledit procédé inclut une étape d'alimentation dudit support en forme de feuille (24) à travers ladite extrudeuse (20, 21).

4. Procédé selon la revendication 2, dans lequel ledit procédé inclut une étape d'alimentation dudit support en forme de feuille (24) autour d'une roue folle (26), et de positionnement dudit support en forme de feuille (24) pour recevoir ladite matière thermoplastique (22) qui est extrudée depuis ladite extrudeuse (21).

5. Procédé selon l'une ou l'autre des revendications 3 et 4, dans lequel ledit procédé inclut une étape consistant à mettre la pièce d'habillage (22) sous forme finale après son extrusion, pour conférer des contours à ses extrémités et donner à la baguette d'habillage (32) une longueur finale prédéterminée après ladite étape de refroidissement.

6. Procédé selon la revendication 5, dans lequel ladite alimentation dudit support en forme de feuille (24) a lieu à une vitesse qui correspond à une vitesse à laquelle ladite matière thermoplastique (22) est extrudée depuis ladite extrudeuse.

7. Procédé selon la revendication 6, dans lequel ledit procédé inclut encore une étape consistant à couper ledit support en forme de feuille (24) en longueurs portant lesdites pièces d'habillage (22) individuelles.

8. Procédé selon la revendication 7, dans lequel ladite étape de refroidissement inclut de faire circuler ladite baguette d'habillage (32) et ledit support en forme de feuille (24) à travers une chambre de refroidissement (34).

9. Procédé selon la revendication 8, dans lequel ladite étape de refroidissement inclut encore de laisser ladite baguette d'habillage (32) et ledit support en forme de feuille (24) se refroidir à la température ambiante.

10. Procédé selon la revendication 9, dans lequel ladite feuille (24) a une épaisseur entre 0,25 mm et 0,75 mm.

11. Procédé selon la revendication 10, dans lequel ladite feuille (24) est en aluminium avec une épaisseur entre 0,5 mm et 0,75 mm.

12. Procédé selon la revendication 10, dans lequel ladite feuille (24) est en acier inoxydable avec une épaisseur entre 0,25 mm et 0,5 mm.

13. Procédé selon la revendication 9, dans lequel ladite matière thermoplastique (22) est du chlorure de polyvinyle.

14. Appareil pour réaliser une baguette d'habillage pour automobiles, comprenant :
une extrudeuse ayant une matrice (20) pour produire un élément extrudé (22) avec section transversale prédéterminée ;
un rouleau (25) qui porte un support en forme de feuille (24),
une chambre de refroidissement (24) ;
un dispositif de coupe (38) ; et
un système convoyeur qui comprend une série de roues folles (26, 28) et de rouleaux (36) pour transporter ledit support en forme de feuille (24) depuis ladite extrudeuse afin de recevoir ledit élément extrudé (22), à travers ladite chambre de refroidissement et vers ledit dispositif de coupe ;
une unité de commande (44) fonctionnellement connectée à ladite extrudeuse (20), audit système convoyeur, et audit dispositif de coupe (38), pour coordonner la vitesse d'extrusion, la vitesse dudit transport, et la temporisation dudit dispositif de coupe, **caractérisé en ce que** :
ledit support en forme de feuille (24) a une surface réceptrice présentant un faible pouvoir adhésif et destinée à coller de façon détachable l'élément extrudé sur le support en forme de feuille.

15. Appareil selon la revendication 14, dans lequel ledit appareil comprend encore une roue de mise en forme (28) qui coopère avec l'une desdites roues folles (26) pour la mise en forme finale dudit élément extrudé lorsque ledit élément extrudé (22) émerge de ladite extrudeuse, en formant de ce fait une baguette d'habillage (32).

16. Appareil selon la revendication 15, dans lequel ledit dispositif de coupe (38) est positionné de manière à couper ledit support en forme de feuille (24) en longueurs afin de porter l'une desdites pièces d'habillage (32) individuellement.
